# EUROPEAN PATENT SPECIFICATION

(11) **EP 2 492 451 B1**
(45) Date of publication and mention of the grant of the patent: **19.05.2021**
(21) Application number: 12157402.4
(22) Date of filing: 28.02.2012
(51) Int. Cl.: F01D 15/10, F02C 7/32, F02C 7/36, B64D 41/00

(54) **Aircraft with low pressure spool emergency generator**
Luftfahrzeug mit an Niederdruckwelle gekoppeltem Notfallgenerator
Aéronef avec générateur d'urgence couplé à un arbre basse pression

(30) Priority: 28.02.2011 US 201113036968; 28.02.2011 US 201113036994
(43) Date of publication of application: 29.08.2012
(73) Proprietor: Hamilton Sundstrand Corporation, Charlotte, NC 28217 (US)
(72) Inventor: Finney, Adam M., Rockford, IL 61114 (US); Krenz, Michael, Roscoe, IL 61073 (US); Wagner, Carl A., Beloit, IL 53511 (US); Jacques, David L., Caledonia, IL 61011 (US)
(74) Representative: Dehns

(56) References cited:
- EP-A2- 2 399 829
- WO-A1-2006/023981
- GB-A- 2 216 603
- GB-A- 2 443 743
- US-A- 3 379 893
- US-A- 6 023 134

## Description

### BACKGROUND

The present invention relates to power generation on aircrafts, and in particular, to emergency power generation and use thereof.

On a typical gas turbine engine powered aircraft, one or more gas turbine engines are used to provide thrust to propel the aircraft and also to power various electrical and hydraulic loads on the aircraft. One or more hydraulic pumps and electrical generators are typically driven by a high pressure spool on each gas turbine engine. So long as each gas turbine engine is operating normally, each high pressure spool rotates, allowing each hydraulic pump and electrical generator to provide hydraulic and electric power to hydraulic and electric loads on the aircraft. However, if a gas turbine engine fails to operate normally, any hydraulic pump or electrical generator coupled to the high pressure spool of that engine will have its output reduced or eliminated. In an emergency situation in which all thrust-producing gas turbine engines and auxiliary power units fail, the aircraft can be left without any power for its electrical and hydraulic loads.

Some aircrafts are prepared for such emergencies by incorporating emergency power systems. These emergency power systems have one or more emergency power sources, such as a ram air turbine (RAT), to provide emergency power. However, emergency power systems typically do not provide enough power to power all hydraulic and/or electric loads on an aircraft. If an emergency power system is configured to power too many loads during an emergency, the emergency power system can become overloaded, stalling the RAT. Stalling a RAT and/or other emergency power sources can reduce or eliminate power to all loads, including those most necessary for safe operation of the aircraft during the emergency.

WO 2006/023981 discloses a method for coordinating engine operation with electrical power extraction in a more electric vehicle (MEV). The method includes: receiving, by an engine control, a command for power output reduction of an engine; waiting until a predetermined event occurs to request, by the engine control, the power output reduction of the engine; reducing or completely switching off, by an electrical energy management system, at least one load applied to a high-speed spool generator connected to a high-speed spool of the engine; reducing the power output reduction of the engine; and shifting power extraction from the high-speed spool generator to a low-speed spool generator connected to a low-speed spool of the engine
EP 2 399 829, representing state of the art in accordance with Article 54(3) EPC, discloses an aircraft comprising an emergency power system which includes multiple emergency power devices that are each sized to provide partial power during emergency operation and/or full power for a portion of emergency operation.

### SUMMARY

The present invention provides an aircraft with an emergency power system as defined in claim 1 and a method for operating an emergency electrical generator as defined in claim 5.

### BRIEF DESCRIPTION OF THE DRAWINGS

FIG. 1 is a schematic side view of a gas turbine engine for use on an aircraft.
FIG. 2 is a block diagram of an electrical power system for use with the gas turbine engine of FIG. 1 on the aircraft.
FIG. 3 is a block diagram of an emergency power system used as part of the electrical power system of FIG. 2.

### DETAILED DESCRIPTION

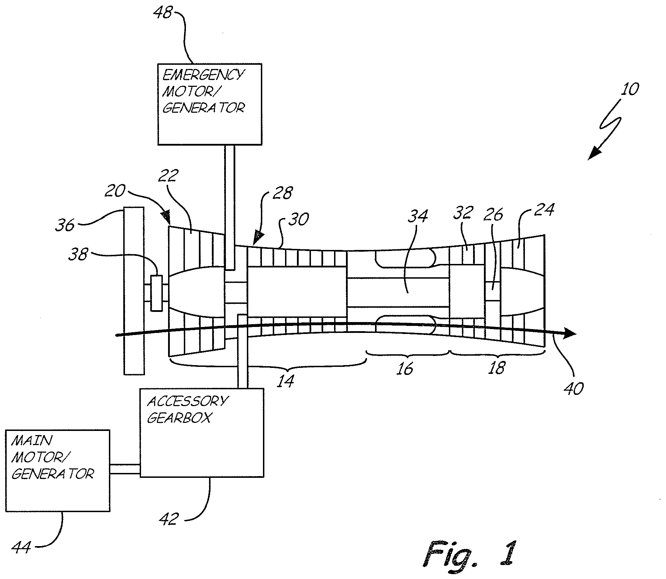

FIG. 1 is a schematic side view of gas turbine engine 10 for use on an aircraft (not shown). Gas turbine engine 10 includes compressor section 14, combustor section 16, and turbine section 18. Low pressure spool 20 (which includes low pressure compressor 22 and low pressure turbine 24 connected by low pressure shaft 26) and high pressure spool 28 (which includes high pressure compressor 30 and high pressure turbine 32 connected by high pressure shaft 34) each extend from compressor section 14 to turbine section 18. Propulsion fan 36 is connected to and driven by low pressure spool 20. A fan drive gear system 38 may be included between the propulsion fan 36 and low pressure spool 20. Air flows from compressor section 14 to turbine section 18 along engine gas flow path 40. The general construction and operation of gas turbine engines is well-known in the art, and therefore detailed discussion here is unnecessary.

Accessory gearbox 42 connects main motor-generator 44 to high pressure spool 28. Main motor-generator 44 can act as an electric motor to drive high pressure spool 28, and can also act as an electrical generator when driven by high pressure spool 28. During normal operation of gas turbine engine 10, high pressure spool 28 drives main motor-generator 44 to generate electrical energy. In an alternative embodiment, main motor-generator 44 can be connected to high pressure spool 28 without using accessory gearbox 42.

Emergency motor-generator 48 is connected to low pressure spool 20. Emergency motor-generator 48 can act as an electric motor to drive low pressure spool 20, and can also act as an electrical generator when driven by low pressure spool 20. In an alternative embodiment, emergency motor-generator 48 can be connected to low pressure spool 20 through gearing (not shown). During an emergency in which gas turbine engine 10 fails to operate normally (for example, if combustion ceases), air forced over propulsion fan 36 can cause propulsion fan 36 to "windmill". Thus, a windmilling propulsion fan 36 can drive low pressure spool 20, which drives emergency motor-generator 48 to generate electrical energy.

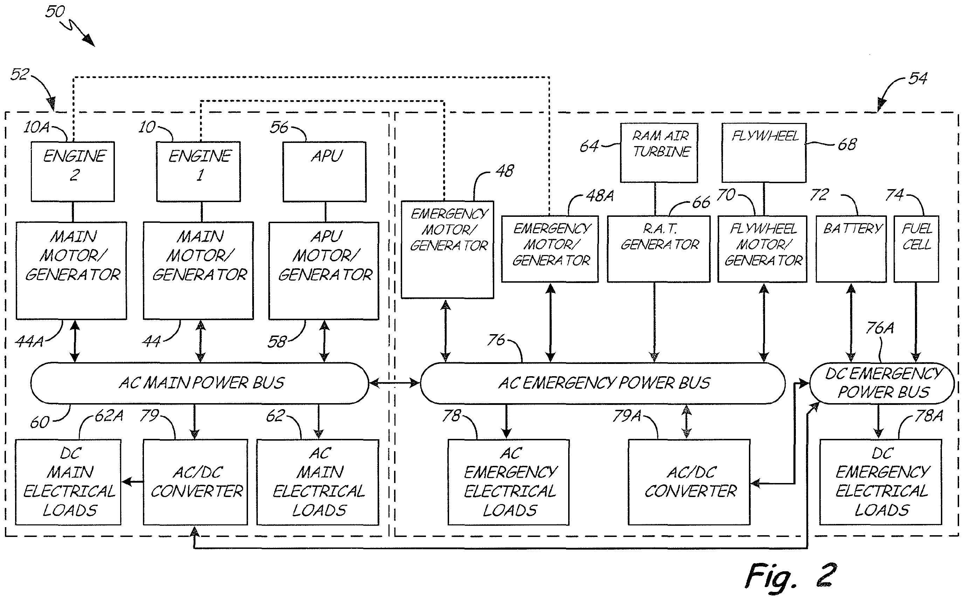

FIG. 2 is a block diagram of electrical power system 50, which include main power system 52 and emergency power system 54. Main power system 52 includes multiple main power sources: gas turbine engine 10 connected to main motor-generator 44, gas turbine engine 10A connected to main motor-generator 44A (which are substantially similar to gas turbine engine 10 and main motor-generator 44, respectively), and auxiliary power unit (APU) 56 connected to APU motor-generator 58. APU 56 includes a gas turbine engine similar to gas turbine engine 10, but APU 56 does not provide propulsive thrust for the aircraft (not shown). In alternative embodiments, main power system 52 can include more or fewer than three main power sources. Each of main motor-generator 44, main motor-generator 44A, and APU motor-generator 58 are connected to AC (alternating current) main power bus 60 for supplying electrical energy to AC main electrical loads 62 and DC (direct current) main electrical loads 62A. During normal operation, AC main electrical loads 62 and DC main electrical loads 62A receive electrical power primarily or exclusively from some combination of gas turbine engine 10, gas turbine engine 10A, and/or APU 56.

Emergency power system 54 includes multiple emergency power sources: emergency motor-generator 48 connected to low pressure spool 20 (shown in FIG. 1) of gas turbine engine 10, emergency motor-generator 48A connected to a low pressure spool (not shown) of gas turbine engine 10A, ram air turbine (RAT) 64 connected to RAT generator 66, flywheel 68 connected to flywheel motor-generator 70, battery 72, and fuel cell 74. Each of emergency motor-generator 48, emergency motor-generator 48A, RAT generator 66, and flywheel motor-generator 70 are connected to AC emergency power bus 76 for supplying electrical energy to AC emergency electrical loads 78. RAT 64 is a turbine that can be deployed into an airstream exterior of the aircraft. Rotating RAT 64 causes RAT generator 66 to also rotate and, consequently, generate and supply electrical power to AC emergency power bus 76. Flywheel motor-generator 70 can convert mechanical energy stored in flywheel 68 to and from electrical energy stored on AC emergency power bus 76.

Battery 72 and fuel cell 74 are connected to DC emergency power bus 76A for supplying electrical energy to DC emergency electrical loads 78A. Battery 72 stores electrical energy from DC emergency power bus 76A and returns electrical energy to DC emergency power bus 76A as needed. Fuel cell 74 can also supply electrical energy to DC emergency power bus 76A.

In the illustrated embodiment, AC emergency power bus 76 is connected to AC main power bus 60, DC emergency electrical loads 78A are connected to AC main power bus 60 via AC/DC converter 79, and DC emergency electrical loads 78A are connected to AC emergency power bus 76 via AC/DC converter 79A. Thus, AC emergency electrical loads 78 can receive electrical power from AC main power bus 60 and/or DC emergency power bus 76A when such power is available. Similarly, DC emergency electrical loads 78A can receive electrical power from AC main power bus 60 and/or AC emergency power bus 76 when such power is available.

AC main electrical loads 62 and AC emergency electrical loads 78 can receive 115 volt three-phase AC power, 235 volt three-phase AC power, or another form of AC power. DC main electrical loads 62A and DC emergency electrical loads 78A can receive 28 volt DC power, 270 volt DC power, or another form of DC power. Electrical power system 50, which includes main power system 52 and emergency power system 54, is illustrated in a simplified form. In practice, additional electrical connections and/or components (not shown) can be added as needed for particular applications.

During emergency operation in which gas turbine engine 10, gas turbine engine 10A and APU 56 fail to operate normally, AC emergency electrical loads 78 and DC emergency electrical loads 78A can still receive electrical power from some or all of emergency motor-generator 48, RAT generator 66, flywheel motor-generator 70, battery 72, and fuel cell 74.

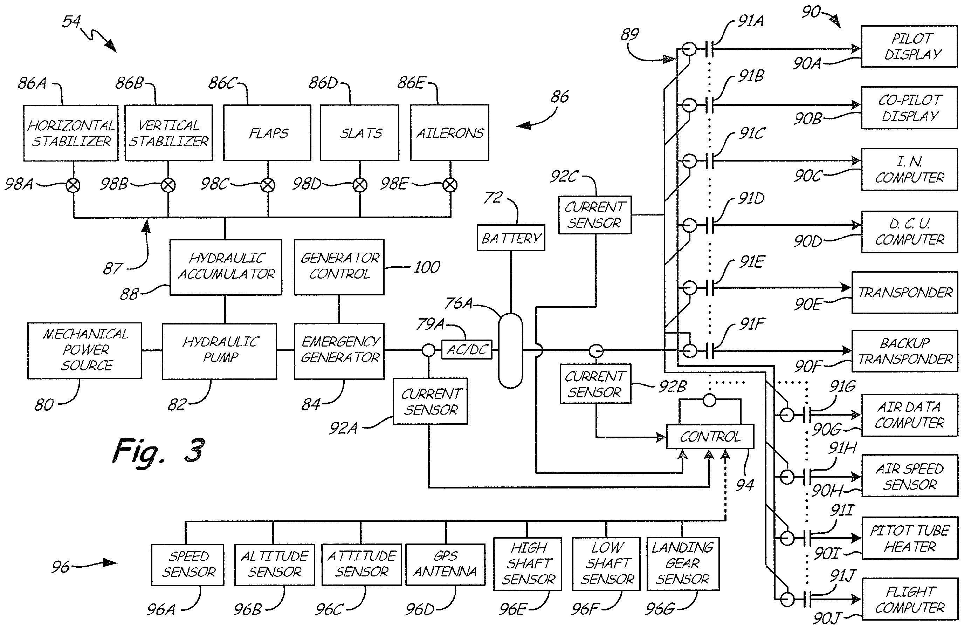

FIG. 3 is a block diagram of emergency power system 54. FIG. 3 illustrates portions of emergency power system 54 in greater detail than in FIG. 2, but is still in a simplified form. In another sense, emergency power system 54 as illustrated in FIG. 3 is simplified to a greater extent than as illustrated in FIG. 2, because FIG. 3 illustrates only a single mechanical power source 80. Thus it should be understood that emergency power system 54 is illustrated in FIG. 3 only as an example. In practice, additional electrical and hydraulic connections and/or components (not shown) can be added as needed for particular applications. Similarly, certain components illustrated in FIG. 3 can be omitted if not needed in a particular embodiment.

Emergency power system 54 includes mechanical power source 80, which drives hydraulic pump 82, which drives emergency generator 84. Mechanical power source 80 can be any suitable source of mechanical power, such as propulsion fan 36 connected to low pressure spool 20 (shown in FIG. 1), RAT 64 (shown in FIG. 2), or flywheel 68 (shown in FIG. 2). Emergency generator 84 can be any suitable electrical generator, such as emergency motor-generator 48 (shown in FIGS. 1 and 2), RAT generator 66 (shown in FIG. 2), or flywheel motor-generator 70 (shown in FIG. 2).

In the illustrated embodiment, hydraulic pump 82 is mechanically connected between mechanical power source 80 and emergency generator 84 to rotate and transmit power there-between. Hydraulic pump 82 is also hydraulically connected to emergency hydraulic loads 86 via hydraulic power distribution network 87 to transmit hydraulic power thereto. Hydraulic accumulator 88 is connected between hydraulic pump 82 and hydraulic loads 86 and acts as a short term energy storage element. Emergency hydraulic loads 86 include one or more of the following: horizontal stabilizer 86A, vertical stabilizer 86B, flaps 86C, slats 86D, and ailerons 86E. Emergency hydraulic loads 86 can also include other hydraulic loads such as landing gear (not shown) and nose wheel steering equipment (not shown). Thus, mechanical power source 80 can provide hydraulic power to emergency hydraulic loads 86 when hydraulic power might otherwise be insufficient or not available. In one embodiment, each emergency hydraulic load 86 can have two or more hydraulic inputs (not shown) to receive power from two or more hydraulic pumps 82. Such hydraulic pumps 82 are each connected to its respective mechanical power source 80. In an alternative embodiment, a given mechanical power source 80 can power multiple hydraulic pumps 82. In still further alternative embodiments, hydraulic loads 86 can be powered electrically instead of hydraulically. In such embodiments, hydraulic pump 82 can be omitted.

Emergency generator 84 is connected to DC emergency power bus 76A via AC/DC converter 79A. Electrical power distribution network 89 connects DC emergency power bus 76A to emergency electrical loads 90. Emergency electrical loads 90 include pilot display 90A, co-pilot display 90B, inertial navigation computer 90C, display control unit computer 90D, transponder 90E, backup transponder 90F, air data computer 90G, air speed data sensor 90H, air speed pitot tube heater 901, and flight computer 90J. Emergency electrical loads 90 can also include other electrical loads such as landing gear (not shown) and nose wheel steering equipment (not shown). Thus, mechanical power source 80 can provide power to emergency electrical loads 90 when electrical power from main power system 52 is insufficient or not otherwise available. Emergency electrical loads 90A-90J can be AC emergency electrical loads 78 (shown in FIG. 2), DC emergency electrical loads 78A (shown in FIG. 2) or some combination of both AC and DC. Accordingly some of emergency electrical loads 90A-90J may require separate power buses. Regardless of whether emergency electrical loads 90A-90J use DC or AC power, electrical power distribution network 89 can function substantially as described below.

Electrical power distribution network 89 connects emergency generator 84 to emergency electrical loads 90. Electrical power distribution network 89 includes switches 91A-91J for selectively coupling and decoupling each respective emergency electrical load 90A-90J to and from emergency generator 84. Current sensor 92A senses current between emergency generator 84 and AC/DC converter 79A. Current sensor 92B senses current between DC emergency power bus 76A and all emergency electrical loads 90, collectively. Current sensor 92C senses current flowing to each emergency electrical load 90A-90J, individually. Current sensors 92A-92C are connected to and send current signals to controller 94.

Aircraft sensors 96 are also connected to controller 94 for sending signals related to flight, engine, and other aircraft data. In various embodiments, aircraft sensors 96 can be connected directly to controller 94, or can be connected to air data computer 90G, flight computer 90J, and/or another computer (not shown) which process raw data and then send data signals to controller 94. Aircraft sensors 96 include speed sensor 96A (which can be the same as or different than air speed data sensor 90H), altitude sensor 96B, attitude sensor 96C, GPS antenna 96D, high pressure shaft sensor 96E, low pressure shaft sensor 96F, and landing gear sensor 96G.

In an emergency, it is desirable to power all emergency electrical loads 90 and all emergency hydraulic loads 86 if sufficient power is available. However, if sufficient power is not available, attempting to power all emergency electrical loads 90 and all emergency hydraulic loads 86 can slow mechanical power source 80 below its minimum operating limit and cause it to stall, thus reducing or eliminating power available to all emergency electrical loads 90 and all emergency hydraulic loads 86. This can potentially cause complete loss of control of the aircraft with catastrophic results.

Controller 94 determines emergency electrical power availability and emergency electrical power demand based on data from aircraft sensors 96 and current sensors 92A-92C. Emergency electrical power demand can include both present demand from emergency electrical loads 90 and anticipated demand from emergency electrical loads 90 over an anticipated duration of an emergency. Emergency electrical power availability can include both stored electrical power and electrical power anticipated to be generated over an anticipated duration of the emergency. For example, controller 94 can determine present emergency electrical power availability and use that information to determine which emergency electrical loads 90 and emergency hydraulic loads 86 can be presently powered. Additionally, controller 94 can determine emergency electrical power availability over an anticipated duration of an emergency and use that information to determine which emergency electrical loads 90 and emergency hydraulic loads 86 can be powered for some or all of the emergency.

Based upon available information, controller 94 can consider a duration of an expected emergency and generate an expected energy production plan and an expected energy use plan. Available emergency electrical power can be determined from the expected energy production plan. The expected energy use plan is designed to work within the constraints of the available emergency electrical power.

Controller 94 is connected to switches 91A-91J for selectively coupling and decoupling one or more emergency electrical load 90A-90J to and from DC emergency power bus 76A. Similarly, controller 94 can also be connected to valves 98A-98E for selectively coupling and decoupling emergency hydraulic loads 86A-86E to and from hydraulic power distribution network 87. In an alternative embodiment, valves 98A-98E can be connected to and controlled by a separate controller (not shown). Controller 94 can actuate switches 91A-91J and valves 98A-98E in accordance with the expected energy use plan.

Though all emergency electrical loads 90 and emergency hydraulic loads 86 are important in an emergency, some are more important than others. Accordingly, a priority rank can be assigned to each emergency electrical load 90 and also to each emergency hydraulic load 86. For example, priority ranks could be assigned in load schedules as in Table 1 and Table 2:

**TABLE 1:**

| **emergency electrical loads 90:** | **Priority Rank:** | **Peak Power Draw (Watts):** | **Emergency Power Draw (Watts):** |
|---|---|---|---|
| pilot display 90A | 2 | 600 | 600 |
| co-pilot display 90B | 4 | 600 | 600 |
| inertial navigation computer 90C | 4 | 200 | 200 |
| display control unit computer 90D | 3 | 400 | 400 |
| transponder 90E | 2 | 1000 | 1000 |
| backup transponder 90F | 6 | 1000 | 0 |
| air data computer 90G | 2 | 250 | 250 |
| air speed data sensor 90H | 3 | 60 | 60 |
| air speed pitot tube heater 901 | 5 | 50 | 50 |
| flight computer 90J | 3 | 120 | 120 |

**TABLE 2:**

| **Emergency Hydraulic Loads 86:** | **Priority Rank:** | **Peak Power Draw (Watts):** | **Emergency Power Draw (Watts):** |
|---|---|---|---|
| horizontal stabilizer 86A | 1 | 5000 | 1200 |
| vertical stabilizer 86B | 8 | 4000 | 0 |
| flaps 86C | 3 | 800 | 400 |
| slats 86D | 7 | 750 | 0 |
| ailerons 86E | 9 | 2000 | 0 |

Tables 1 and 2 show each emergency electrical load 90 and emergency hydraulic load 86 with a numerical priority rank. In the illustrated embodiment, a priority rank of one is the highest priority and a priority rank of ten is the lowest priority. Horizontal stabilizer 86A has a priority rank of one. This means that horizontal stabilizer 86A will always be powered if at all possible. Conversely, ailerons 86E have a priority rank of nine. No emergency load has a priority rank of ten. This means that if any emergency electrical load 90 or emergency hydraulic load 86 must have its power cut, ailerons 86E will lose power first. Each priority rank represents a relative importance of each emergency electrical load 90 and emergency hydraulic load 86 during emergency operation. When there are redundant emergency electrical loads 90, controller 94 can assign different priority ranks to each. For example, in Table 1 above, transponder 90E is assigned a relatively high priority rank of two, while backup transponder 90F is assigned a relatively low priority rank of six. If controller 94 determines that a particular emergency electrical load 90 has failed, controller 94 can assign it a reduced priority rank that is lower than its regular priority rank.

Tables 1 and 2 also show the peak power draw for each emergency electrical load 90 and emergency hydraulic load 86, which is the highest rated power drawn during normal operation.

Tables 1 and 2 further show emergency power draw for each emergency electrical load 90 and emergency hydraulic load 86 for a particular emergency situation. In one embodiment, controller 94 determines that in a particular emergency situation, the expected energy production plan includes available emergency power of 5000 watts. Because 5000 watts is far less than the total peak power draw, controller 94 sets a priority rank threshold of five. Those emergency electrical loads 90 and emergency hydraulic loads 86 with a priority rank between one and five have a combined emergency power draw of 4880 watts. Thus, all emergency electrical loads 90 and emergency hydraulic loads 86 with a priority rank between one and five will receive power, and all emergency electrical loads 90 and emergency hydraulic loads 86 with a priority rank between six and ten will receive no power. This allows controller 94 to ensure the most important emergency electrical loads 90 and emergency hydraulic loads 86 will receive power, even when there is not enough emergency power available to power all loads. In different emergencies, controller 94 can set a priority rank threshold greater than or less than five. In alternative embodiments, each emergency electrical load 90 and emergency hydraulic load 86 can have a priority rank, a peak power draw, and an emergency power draw different from those illustrated in Tables 1 and 2.

Controller 94 can automatically decouple a lowest priority emergency electrical load 90 from emergency generator 84 either in anticipation of electrical power distribution network 89 demanding emergency power in excess of available emergency power or in anticipation of potential shutdown of emergency generator 84. If it is anticipated that electrical power distribution network 89 will continue to demand emergency power in excess of available emergency power even after decoupling the lowest priority emergency electrical load 90, then controller 94 can automatically decouple a next lowest priority electrical load 90 from emergency generator 84. For example, controller 94 can decouple one or more emergency electrical loads 90 in response to controller 94 determining that mechanical power source 80 is anticipated to stall absent the decoupling. Controller 94 can also automatically re-couple one or more emergency electrical loads 90 to emergency electrical generator 84 in response to an increase in the available emergency electrical power. Emergency electrical loads 90 are recoupled in order, based upon the priority rank assigned to each emergency electrical load 90. Actual current draw by each emergency electrical load 90 can often be substantially less than rated current draw. Consequently, controller 94 determines whether to couple or decouple each emergency electrical load 90 based upon actual current signals from current sensors 92A-92C as well as priority rank assigned to each emergency electrical load 90. Controller 94 can also consider data provided by aircraft sensors 96 in determining whether to couple or decouple a particular emergency electrical load 90.

In a similar manner, controller 94 can also automatically couple and decouple a lowest and/or next lowest priority emergency hydraulic load 86 from hydraulic pump 82 in anticipation of hydraulic power distribution network 87 demanding emergency power in excess of available emergency power.

When emergency power system 54 has multiple mechanical power sources 80 (such as low pressure spool 20, RAT 64, and flywheel 68), each can have a dynamically changing maximum electrical and hydraulic power capacity which can be predicted and balanced. As part of the expected energy production plan, generator controller 100 has an energy extraction plan for operating emergency generator 84. Using low pressure spool 20 as mechanical power source 80 and emergency motor-generator 48 as emergency generator 84, generator controller 100 controls emergency motor-generator 48 to increase total energy extracted from low pressure spool 20 over an anticipated duration of an emergency, without loading low pressure spool 20 so much so as to cause it and propulsion fan 36 to stall. This can be done by predicting when low pressure spool 20 will have a relatively large amount of energy available for extraction and when it will have a relatively small amount of energy available for extraction.

The energy extraction plan is developed by controller 94. In the illustrated embodiment, controller 94 and generator controller 100 are separate units that can communicate with one-another. In an alternative embodiment, controller 94 and generator controller 100 can be the same unit. In still further alternative embodiments, one or more additional control units (not shown) can be used to perform some of the functions described with respect to controller 94 and generator controller 100. In any case, the energy extraction plan can be developed based upon emergency electrical power demanded by emergency electrical loads 90 and emergency electrical power availability from emergency generator 84. Generator controller 100 then controls emergency generator 84 according to the energy extraction plan.

Data from sensors 96 is used to anticipate emergency electrical power availability over the course of an emergency. Speed sensor 96A provides data on air speed of the aircraft. Altitude sensor 96B provides data on altitude of the aircraft. Attitude sensor 96C provides data on the current attitude or pitch of the aircraft. GPS antenna 96D provides actual position data for the aircraft, and consequently, distance from a suitable landing strip. All of this data can be used to determine how much power is likely to be generated by air flowing over propulsion fan 36 to drive and rotate low pressure spool 20 (and air flowing over RAT 64) in the immediate future and over the course of the entire emergency until a safe landing and a controlled stop has been completed.

High shaft sensor 96E provides data on actual rotation speed of high pressure spool 28 (shown in FIG. 1), which is an indication of how much energy is stored in high pressure spool 28 for potential extraction by main motor-generator 44. Low shaft sensor 96F provides data on actual rotation speed of low pressure spool 20, which is an indication of how much energy is stored in low pressure spool 20 for potential extraction by emergency motor-generator 48. RAT 64 and flywheel 68 can also have shaft sensors (not shown) that function in a similar manner as high shaft sensor 96E and low shaft sensor 96F.

Controller 94 and/or generator controller 100 can signal main motor-generator 44 to rotate high pressure spool 28 for storing energy. This can be done when battery 72 is fully charged and emergency electrical power is being generated in excess of emergency electrical power demand. Then when emergency electrical power generation is exceeded by demand, main motor-generator 44 can extract energy from high pressure spool 28 to recover previously stored energy. Thus, high pressure spool 28 can be used in a manner similar to that of flywheel 68.

Landing gear sensor 96G provides data on the current position (deployed or retracted) of landing gear (not shown). If the landing gear is deployed, it can block air flow and create turbulence over RAT 64, if RAT 64 is positioned behind the landing gear. Thus, landing gear sensor 96G provides data that effectively indicates that power produced by RAT 64 can be expected to decrease.

Data from all sensors 96 and current sensors 92A-92C help controller 94 and generator controller 100 develop and use expected energy production plans, expected energy use plans, and energy extraction plans, as described above. Thus, emergency power system 54 can provide power for the most important of emergency electrical loads 90 and emergency hydraulic loads 86, without stalling the mechanical power sources 80 on which the loads rely.

While the invention has been described with reference to exemplary embodiments, it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims. For example, the quantity of emergency electrical loads, emergency hydraulic loads, sensors, and/or other components can be more or fewer than those described above. Additionally, the invention can be used with gas turbine engines that differ from that illustrated in FIG. 1, such as those with more than one high pressure spool and those without a fan drive gear system.

## Claims

1. An aircraft including an emergency power system (54), the aircraft having one or more thrust producing gas turbine engine(s) and one or more auxiliary power unit(s), each gas turbine engine (10) having a low pressure spool (20) and a high pressure spool (28) and the emergency power system being for use in the event of an emergency comprising all thrust-producing gas turbine engine(s) and auxiliary power unit(s) of the aircraft failing to operate normally, the emergency power system comprising:
an emergency electrical generator (48) configured to be coupled to the low pressure spool during an emergency for generating emergency electrical power;
one or more electrical power sources in addition to the auxiliary power unit(s) of the aircraft (48A,66,70,72,74);
a plurality of electrical loads (78,78A) electrically connected to the emergency electrical generator and the one or more additional electrical power sources;
aircraft sensors (96A-96G) for providing data regarding emergency electrical power availability and emergency electrical power demand, wherein the aircraft sensors include current sensors (92A) for sensing current generated by each of the emergency electrical generator and the one or more additional electrical power sources, and current sensors (92B) for sensing current demand by each of the plurality of electrical loads; and
a controller (94) for controlling the emergency electrical generator,
wherein the controller is configured to determine emergency electrical power demand and emergency electrical power availability based upon data from the aircraft sensors;
wherein the controller is configured to develop an energy extraction plan to increase total energy extracted from a windmilling fan (36) attached to the low pressure spool over an anticipated duration of the emergency based upon the emergency electrical power demand and the emergency electrical power availability, and
wherein the controller is configured to control the emergency electrical generator according to the energy extraction plan.

2. The aircraft of claim 1, wherein the emergency electrical power availability includes stored electrical power and electrical power anticipated to be generated over an anticipated duration of the emergency; and/or
wherein the emergency electrical power demand includes present demand from the plurality of electrical loads and anticipated demand from the plurality of electrical loads over an anticipated duration of the emergency.

3. The aircraft of any one of claims 1 to 2, wherein the controller is configured to signal a main motor-generator (44) to rotate the high pressure spool to store energy, and wherein the controller is configured to signal the main motor-generator to extract energy from the high pressure spool to recover previously stored energy.

4. The aircraft of any one of claims 1 to 3, wherein the aircraft sensors further include a speed sensor (96A), an altitude sensor (96B), an attitude sensor (96C), a GPS antenna (96D), a high pressure shaft sensor (96E), a low pressure shaft sensor (96F), and a landing gear sensor (96G).

5. A method for operating an emergency electrical generator (48) coupled to a low pressure spool (20) of a gas turbine engine (10) of an aircraft during an emergency comprising all thrust-producing gas turbine engine(s) and auxiliary power unit(s) of the aircraft failing to operate normally, the method comprising:
sensing data regarding emergency electrical power availability from the emergency electrical generator and one or more electrical power sources provided in addition to the auxiliary power unit(s) of the aircraft (48A,66,70,72) using current sensors (92A) for sensing current generated by each of the emergency electrical generator and the one or more electrical power sources;
sensing data regarding emergency electrical power demand from a plurality of electrical loads electrically connected to the emergency electrical generator and the one or more additional electrical power sources using current sensors (92B) for sensing current demand by each of the plurality of electrical loads;
developing an energy extraction plan to increase total energy extracted from a windmilling fan (36) attached to the low pressure spool over an anticipated duration of the emergency based upon the emergency electrical power demand and the emergency electrical power availability; and
controlling the emergency electrical generator according to the energy extraction plan.

6. The method of claim 5, wherein the emergency electrical power availability includes stored electrical power and electrical power anticipated to be generated over an anticipated duration of the emergency.

7. The method of claim 5 or 6, wherein the emergency electrical power demand includes current demand from the plurality of electrical loads and anticipated demand from the plurality of electrical loads over an anticipated duration of the emergency.

8. The method of claim 5, 6 or 7, wherein data regarding emergency electrical power availability includes a low pressure spool shaft speed; and
wherein data regarding emergency electrical power availability further includes a high pressure spool shaft speed and a ram air turbine shaft speed.

9. The method of any one of claims 5 to 8, and further comprising:
determining altitude and distance to a suitable landing strip as part of developing the energy extraction plan; and/or
determining power needed for a safe landing and coming to a controlled stop as part of developing the energy extraction plan.

10. The method of any one of claims 5 to 9, and further comprising:
automatically decoupling one or more of the electrical loads from the emergency electrical generator as part of the energy extraction plan;
wherein the electrical loads are decoupled based upon a priority rank assigned to each of the electrical loads.

11. The method of any one of claims 5 to 10, and further comprising:
driving a main motor-generator to rotate a high pressure spool of the gas turbine engine to store energy in the high pressure spool; and extracting energy from the high pressure spool via the main motor-generator.

12. The method of any one of claims 5 to 11, wherein the energy extraction plan avoids stalling the windmilling fan during flight.

## Patentansprüche

1. Luftfahrzeug, das eine Notstromanlage (54) beinhaltet, wobei das Luftfahrzeug ein oder mehrere schuberzeugende(s) Gasturbinentriebwerk(e) und ein oder mehrere Hilfstriebwerk(e) aufweist, wobei jedes Gasturbinentriebwerk (10) eine Niederdruckwelle (20) und eine Hochdruckwelle (28) aufweist und die Notstromanlage zur Verwendung in dem Fall eines Notfalls, der umfasst, dass alle schuberzeugenden Gasturbinentriebwerk(e) und Hilfstriebwerk(e) des Luftfahrzeugs nicht normal arbeiten, dient, wobei die Notstromanlage Folgendes umfasst:
einen Notstromgenerator (48), der so konfiguriert ist, dass er mit der Niederdruckwelle während eines Notfalls zum Erzeugen von Notstrom gekoppelt ist;
eine oder mehrere Stromquellen zusätzlich zu dem/den Hilfstriebwerk(en) des Luftfahrzeugs (48A, 66, 70, 72, 74);
eine Vielzahl von elektrischen Lasten (78, 78A), die elektrisch mit dem Notstromgenerator und der einen oder den mehreren zusätzlichen Stromquellen verbunden sind;
Luftfahrzeugsensoren (96A-96G) zum Bereitstellen von Daten in Bezug auf die Notstromverfügbarkeit und den Notstrombedarf, wobei die Luftfahrzeugsensoren Stromsensoren (92A) zum Erfassen von Strom, der von jedem aus dem Notstromgenerator und der einen oder den mehreren zusätzlichen Stromquellen erzeugt wird, und Stromsensoren (92B) zum Erfassen des Strombedarfs von jeder aus der Vielzahl von elektrischen Lasten beinhalten; und
eine Steuerung (94) zum Steuern des Notstromgenerators,
wobei die Steuerung so konfiguriert ist, dass sie den Notstrombedarf und die Notstromverfügbarkeit basierend auf Daten von den Luftfahrzeugsensoren ermittelt;
wobei die Steuerung so konfiguriert ist, dass sie einen Energiegewinnungsplan entwickelt, um die Gesamtenergie zu erhöhen, die aus einem Autorotationsbläser (36), der an der Niederdruckwelle angebracht ist, über eine erwartete Dauer des Notfalls basierend auf dem Notstrombedarf und der Notstromverfügbarkeit gewonnen wird, und
wobei die Steuerung so konfiguriert ist, dass sie den Notstromgenerator gemäß dem Energiegewinnungsplan steuert.

2. Luftfahrzeug nach Anspruch 1, wobei die Notstromverfügbarkeit gespeicherte elektrische Energie und elektrische Energie, von der erwartet wird, dass sie über eine erwartete Dauer des Notfalls erzeugt wird, beinhaltet; und/oder wobei der Notstrombedarf den vorliegenden Bedarf von der Vielzahl von elektrischen Lasten und den erwarteten Bedarf von der Vielzahl von elektrischen Lasten über eine erwartete Dauer des Notfalls beinhaltet.

3. Luftfahrzeug nach einem der Ansprüche 1 bis 2, wobei die Steuerung so konfiguriert ist, dass sie einem Hauptmotorgenerator (44) signalisiert, die Hochdruckwelle zu drehen, um Energie zu speichern, und wobei die Steuerung so konfiguriert ist, dass sie dem Hauptmotorgenerator signalisiert, Energie aus der Hochdruckwelle zu gewinnen, um die zuvor gespeicherte Energie wiederzugewinnen.

4. Luftfahrzeug nach einem der Ansprüche 1 bis 3, wobei die Luftfahrzeugsensoren ferner einen Geschwindigkeitssensor (96A), einen Höhensensor (96B), einen Lagensensor (96C), eine GPS-Antenne (96D), einen Hochdruckwellensensor (96E), einen Niederdruckwellensensor (96F) und einen Fahrwerksensor (96G) beinhalten.

5. Verfahren zum Betreiben eines Notstromgenerators (48), der mit einer Niederdruckwelle (20) eines Gasturbinentriebwerks (10) eines Luftfahrzeugs gekoppelt ist, während eines Notfalls, der umfasst, dass alle schuberzeugenden Gasturbinentriebwerk(e) und Hilfstriebwerk(e) des Luftfahrzeugs nicht normal arbeiten, wobei das Verfahren Folgendes umfasst:
Erfassen von Daten in Bezug auf eine Notstromverfügbarkeit von dem Notstromgenerator und einer oder mehreren Stromquellen, die zusätzlich zu dem/den Hilfstriebwerk(en) des Luftfahrzeugs (48A, 66, 70, 72) bereitgestellt sind, unter Verwendung von Stromsensoren (92A) zum Erfassen von Strom, der von jedem aus dem Notstromgenerator und der einen oder den mehreren Stromquellen erzeugt wird;
Erfassen von Daten in Bezug auf einen Notstrombedarf von einer Vielzahl von elektrischen Lasten, die elektrisch mit dem Notstromgenerator und der einen oder den mehreren zusätzlichen Stromquellen verbunden sind, unter Verwendung von Stromsensoren (92B) zum Erfassen eines Strombedarfs durch jede aus der Vielzahl von elektrischen Lasten;
Entwickeln eines Energiegewinnungsplans, um die Gesamtenergie zu erhöhen, die aus einem Autorotationsbläser (36), der an der Niederdruckwelle angebracht ist, über eine erwartete Dauer des Notfalls gewonnen wird, basierend auf dem Notstrombedarf und der Notstromverfügbarkeit; und
Steuern des Notstromgenerators gemäß dem Energiegewinnungsplan.

6. Verfahren nach Anspruch 5, wobei die Notstromverfügbarkeit gespeicherte elektrische Energie und elektrische Energie, von der erwartet wird, dass sie über eine erwartete Dauer des Notfalls erzeugt wird, beinhaltet.

7. Verfahren nach Anspruch 5 oder 6, wobei der Notstrombedarf den vorliegenden Bedarf von der Vielzahl von elektrischen Lasten und den erwarteten Bedarf von der Vielzahl von elektrischen Lasten über eine erwartete Dauer des Notfalls beinhaltet.

8. Verfahren nach Anspruch 5, 6 oder 7, wobei Daten in Bezug auf die Notstromverfügbarkeit eine Drehzahl der Niederdruckwelle beinhalten; und
wobei Daten in Bezug auf die Notstromverfügbarkeit ferner eine Drehzahl der Hochdruckwelle und eine Drehzahl der Stauluftturbinenwelle beinhalten.

9. Verfahren nach einem der Ansprüche 5 bis 8, und ferner Folgendes umfassend:
Ermitteln einer Höhe und eines Abstands zu einem geeigneten Landestreifen als Teil des Entwickelns des Energiegewinnungsplans; und/oder
Ermitteln einer Energie, die für ein sicheres Landen und ein sicheres Anhalten benötigt wird, als Teil des Entwickelns des Energiegewinnungsplans.

10. Verfahren nach einem der Ansprüche 5 bis 9, und ferner Folgendes umfassend:
automatisches Entkoppeln einer oder mehrerer der elektrischen Lasten von dem Notstromgenerator als Teil des Energiegewinnungsplans;
wobei die elektrischen Lasten basierend auf einem Prioritätsrang, der jeder der elektrischen Lasten zugewiesen ist, entkoppelt werden.

11. Verfahren nach einem der Ansprüche 5 bis 10, und ferner Folgendes umfassend:
Antreiben eines Hauptmotorgenerators, um eine Hochdruckwelle des Gasturbinentriebwerks zu drehen, um Energie in der Hochdruckwelle zu speichern; und
Gewinnen von Energie aus der Hochdruckwelle über den Hauptmotorgenerator.

12. Verfahren nach einem der Ansprüche 5 bis 11,
wobei der Energiegewinnungsplan ein Strömungsabreißen des Autorotationsbläsers während des Flugs vermeidet.

## Revendications

1. Aéronef incluant un système d'alimentation d'urgence (54), l'aéronef ayant un ou plusieurs moteurs à turbine à gaz produisant une poussée et une ou plusieurs unités d'alimentation auxiliaires, chaque moteur à turbine à gaz (10) ayant un arbre basse pression (20) et un arbre haute pression (28) et le système d'alimentation d'urgence étant destiné à être utilisé en cas d'urgence, comprenant l'ensemble des un ou plusieurs moteurs à turbine à gaz produisant une poussée et des une ou plusieurs unités d'alimentation auxiliaires de l'aéronef ne fonctionnant pas normalement, le système d'alimentation d'urgence comprenant :
un générateur électrique d'urgence (48) configuré pour être couplé à l'arbre basse pression pendant une urgence pour générer une alimentation électrique d'urgence ;
une ou plusieurs sources d'alimentation électrique en plus des une ou plusieurs unités d'alimentation auxiliaires de l'aéronef (48A, 66, 70, 72, 74) ;
une pluralité de charges électriques (78, 78A) reliées de manière électrique au générateur électrique d'urgence et aux une ou plusieurs sources d'alimentation électrique supplémentaires ;
des détecteurs d'aéronef (96A-96G) pour fournir des données concernant la disponibilité d'alimentation électrique d'urgence et la demande d'alimentation électrique d'urgence, dans lequel les détecteurs d'aéronef incluent des détecteurs de courant (92A) destinés à détecter un courant généré par chacun parmi le générateur électrique d'urgence et les une ou plusieurs sources d'alimentation électrique supplémentaires et des détecteurs de courant (92B) pour détecter une demande de courant par chacune parmi la pluralité de charges électriques ; et
un dispositif de commande (94) pour commander le générateur électrique d'urgence,
dans lequel le dispositif de commande est configuré pour déterminer une demande d'alimentation électrique d'urgence et la disponibilité d'alimentation électrique d'urgence sur la base de données provenant des détecteurs d'aéronef ;
dans lequel le dispositif de commande est configuré pour développer un plan d'extraction d'énergie pour augmenter l'énergie totale extraite à partir d'une soufflante tournant en moulinet (36) fixée à l'arbre basse pression pendant une durée prévue de l'urgence sur la base de la demande d'alimentation électrique d'urgence et de la disponibilité d'alimentation électrique d'urgence, et
dans lequel le dispositif de commande est configuré pour commander le générateur électrique d'urgence selon le plan d'extraction d'énergie.

2. Aéronef selon la revendication 1, dans lequel la disponibilité d'alimentation électrique d'urgence inclut une alimentation électrique stockée et une alimentation électrique prévue d'être générée pendant une durée prévue de l'urgence ; et/ou
dans lequel la demande d'alimentation électrique d'urgence inclut la demande actuelle à partir de la pluralité de charges électriques et la demande prévue à partir de la pluralité de charges électriques pendant une durée prévue de l'urgence.

3. Aéronef selon l'une quelconque des revendications 1 et 2, dans lequel le dispositif de commande est configuré pour signaler à un moteur-générateur principal (44) de faire tourner l'arbre haute pression afin de stocker de l'énergie, et dans lequel le dispositif de commande est configuré pour signaler au moteur-générateur principal d'extraire de l'énergie à partir de l'arbre haute pression afin de récupérer l'énergie précédemment stockée.

4. Aéronef selon l'une quelconque des revendications 1 à 3, dans lequel les détecteurs d'aéronef incluent en outre un détecteur de vitesse (96A), un détecteur d'altitude (96B), un détecteur d'assiette (96C), une antenne GPS (96D), un détecteur d'arbre haute pression (96E), un détecteur d'arbre basse pression (96F) et un détecteur de train d'atterrissage (96G).

5. Procédé de fonctionnement d'un générateur électrique d'urgence (48) couplé à un arbre basse pression (20) d'un moteur à turbine à gaz (10) d'un aéronef pendant une urgence comprenant l'ensemble des un ou plusieurs moteurs à turbine à gaz produisant une poussée et des une ou plusieurs unités d'alimentation auxiliaire de l'aéronef ne fonctionnant pas normalement, le procédé comprenant :
la détection de données concernant la disponibilité d'alimentation électrique d'urgence à partir du générateur électrique d'urgence et d'une ou de plusieurs sources d'alimentation électrique fournies en plus des une ou plusieurs unités d'alimentation auxiliaires de l'aéronef (48A, 66, 70, 72) en utilisant des détecteurs de courant (92A) pour détecter un courant généré par chacun parmi le générateur électrique d'urgence et les une ou plusieurs sources d'alimentation électrique ;
la détection de données concernant la demande d'alimentation électrique d'urgence à partir d'une pluralité de charges électriques reliées de manière électrique au générateur électrique d'urgence et des une ou plusieurs sources d'alimentation électrique supplémentaires en utilisant des détecteurs de courant (92B) pour détecter une demande de courant par chacune parmi la pluralité de charges électriques ;
le développement d'un plan d'extraction d'énergie pour augmenter l'énergie totale extraite à partir d'une soufflante tournant en moulinet (36) fixée à l'arbre basse pression pendant une durée prévue de l'urgence sur la base de la demande d'alimentation électrique d'urgence et de la disponibilité d'alimentation électrique d'urgence ; et
la commande du générateur électrique d'urgence selon le plan d'extraction d'énergie.

6. Procédé selon la revendication 5, dans lequel la disponibilité d'alimentation électrique d'urgence inclut une alimentation électrique stockée et une alimentation électrique prévue d'être générée pendant une durée prévue de l'urgence.

7. Procédé selon la revendication 5 ou 6, dans lequel la demande d'alimentation électrique d'urgence inclut la demande de courant à partir de la pluralité de charges électriques et la demande prévue à partir de la pluralité de charges électriques pendant une durée prévue de l'urgence.

8. Procédé selon la revendication 5, 6 ou 7, dans lequel des données concernant la disponibilité d'alimentation électrique d'urgence incluent une vitesse d'arbre de corps basse pression ; et
dans lequel des données concernant la disponibilité d'alimentation électrique d'urgence incluent en outre une vitesse d'arbre de corps haute pression et une vitesse d'arbre de turbine à air dynamique.

9. Procédé selon l'une quelconque des revendications 5 à 8, et comprenant en outre :
la détermination de l'altitude et de la distance d'une piste d'atterrissage appropriée dans le cadre du développement du plan d'extraction d'énergie ; et/ou
la détermination de l'alimentation nécessaire pour un atterrissage et une arrivée en toute sécurité à un arrêt contrôlé dans le cadre du développement du plan d'extraction d'énergie.

10. Procédé selon l'une quelconque des revendications 5 à 9, et comprenant en outre :
le découplage automatique d'une ou de plusieurs charges électriques à partir du générateur électrique d'urgence dans le cadre du plan d'extraction d'énergie ;
dans lequel les charges électriques sont découplées sur la base d'un rang de priorité attribué à chacune parmi les charges électriques.

11. Procédé selon l'une quelconque des revendications 5 à 10, et comprenant en outre :
l'entraînement d'un moteur-générateur principal pour faire tourner un arbre haute pression du moteur à turbine à gaz afin de stocker de l'énergie dans l'arbre haute pression ; et
l'extraction d'énergie à partir de l'arbre haute pression au moyen du moteur-générateur principal.

12. Procédé selon l'une quelconque des revendications 5 à 11, dans lequel le plan d'extraction d'énergie évite le calage de la soufflante tournant en moulinet pendant le vol.
